# EUROPEAN PATENT APPLICATION

(11) **EP 1 213 196 A1**
(43) Date of publication of application: **12.06.2002**
(21) Application number: 00204411.3
(22) Date of filing: 11.12.2000
(51) Int. Cl.: B60R 25/10

(54) **A theft alarm system, an alarm unit for a theft alarm system, a method and use thereof**

(71) Applicant: Overvad, Jan, 9500 Hobro (DK)
(72) Inventor: Overvad, Jan, 9500 Hobro (DK)
(74) Representative: Elmeros, Claus

(57) **Abstract**

The invention relates to a theft alarm system for one or more movable units comprising one or more detecting means for detecting the direction of the system relative to the orientation of the Earth's magnetic field, at least one signal processing means comprising means for establishing a reference direction of the system, one or more alarm devices, wherein said signal processing means further comprises means for generating a direction clearance value, means for establishing a comparison value from the direction of the system where said reference direction is weighted with said clearance value and means for establishing a connection to said one or more alarm devices in dependency of the comparison value.

## Description

### Background of the invention

The invention relates to a theft alarm system according to the preamble of claim 1, a theft alarm unit for a theft alarm system, a method and use thereof.

Theft alarm systems based on compass direction detection have been known for quite some time. When activated, the system will react on direction movements of the system relative to the Earth's magnetic field and set off an alarm if the direction changes. The theft alarm systems have primarily been developed for vehicle use. An example of such a system is described in US-A 5.457.438.

However, in practical use, a system of the above-mentioned type has many drawbacks. The system is very sensible even to small changes in direction and false alarms are very common. A false alarm can be triggered by vibrations e.g. from a heavy vehicle passing the alarm system or by a subject containing iron placed in proximity of the alarm system.

The many false alarms result in very low credibility of the known systems.

The object of the invention is to create a theft alarm system which does not have the drawbacks of the known systems. It is also an object of the invention to create a system which may be adapted to and used in different types of applications.

### The invention

When, as stated in claim 1, said signal processing means further comprises means for generating a direction clearance value, means for defining an alarm area and a non-alarm area in relation to said direction clearance value, means for establishing a comparison value by comparing a direction value with said alarm area and a non-alarm area wherein said alarm system further comprises means for establishing a connection to said one or more alarm devices in dependency of said comparison value, an advantageous embodiment of the invention has been obtained. The clearance value means that the direction may change within a certain clearance value without setting off the alarm and the feasibility of the system has hereby been significantly improved.

The clearance value also allows use of less precise and expensive components in the detector devices and attached circuits since the inaccuracies are easily compensated for by another clearance value, if necessary.

The use of clearance value is based on the assumption that a moving unit, e.g. a vehicle, will change direction quickly, exceed the clearance value and set off the alarm.

When, as stated in claim 2, said at least one detecting means is hall elements, it is possible to construct direction detecting means with no moving parts. The durability of the system is hereby significantly improved.

When, as stated in claim 3, said at least one detecting means comprises means for detecting a direction in a horizontal and/or vertical plane, it is possible to avoid false alarms caused by such movements. Previously, movements in the vertical direction have not been accounted for but with this invention, they will also be determined by the detecting means and easily interpreted as an entirely horizontal movement.

By detection in both the horizontal and the vertical plane, the establishment of the direction will become more accurate.

When, as stated in claim 4, said clearance value is changeable, it is possible to use the system in many different areas of application. In an application where the direction changes are small, the clearance value is kept low and vice versa. It will also be possible to change the clearance value to avoid false alarms in relation to transitory direction changes.

When, as stated in claim 5, said alarm system further comprises at least one transmitting and receiving means, it is possible to communicate the result of the direction detection to a distant part of the alarm system and at the same time receive different commands.

When, as stated in claim 6, said at least one transmitting and receiving means is a wireless communication device, such as a mobile telephone module, it is possible to use a standard mobile telephone to control an alarm unit.

The possibility of contacting the mobile telephone module in the alarm unit from anywhere by means of a mobile network is especially advantageous.

When, as stated in claim 7, said at least one transmitting and receiving means communicates with a remote control unit, such as a mobile telephone, it is possible to communicate with the alarm system from a distance and control it. The communication may be transmission of direction clearance values to the alarm system before it is installed in a movable unit.

This is especially advantageous due to the fact that the alarm unit is quite sensitive to movements and direct control of the alarm unit e.g. by using an integrated keyboard will involve the risk of setting off a false alarm.

The communication between the units will initially involve transmission of a password for the remote control unit to gain control over the alarm unit.

When, as stated in claim 8, said system includes mounting means to be used when mounting said system to said one or more movable units, it is possible to increase the safety of the system ensuring that it reacts in a theft situation and does not react in a non-theft situation.

The mounting means may be a furnishing mounted on the surface of the movable unit in question and have a non-symmetrical opening e.g. an oval opening. The alarm unit has means corresponding to the opening of the furnishing hereby fitting into the opening. The alarm unit may subsequently be locked to the furnishing if the alarm unit is turned e.g. 90 degrees in relation to the furnishing. To remove the alarm unit from the furnishing, the unit has to be turned back to its original position. If the alarm unit is not deactivated, any attempt to remove the unit by turning will active an alarm transmission due to the basic principles of the invention.

It should be emphasized that in its basic form, the furnishing may be used to fasten the alarm unit to the movable unit in a stable manner and hereby minimize the risk of false alarm transmissions further. In this basic embodiment, the furnishing may be any kind of furnishing with any kind of fastening means to the movable unit and the alarm unit such as nails, screws, bolts, glue or similar adhesive means. The furnishing may be made of any kind of material such as metal, wood or plastic.

When, as stated in claim 9, an alarm unit for a theft alarm system for one or more movable units, according to claim 1, comprises one or more detecting means, at least one signal processing means, at least one transmitting and receiving means and an internal energy source wherein said alarm unit is housed in a compact casing, an advantageous embodiment of the invention has been achieved.

The compact casing is very relevant in connection with an alarm unit and a theft alarm system since a thief should not be able to locate the unit. By keeping the casing compact, the unit can be hidden almost anywhere.

At the same time, the alarm unit includes an integrated energy source and transmitting and receiving means which means that the alarm unit can be created without any wiring to the surroundings. Hereby, it is even more difficult for a thief to locate the unit since he does not have the opportunity to track the wiring from e.g. an external battery or power supply.

The compact casing, the integrated energy source and the transmitting and receiving means further enhance the possibility of easy removal and installation of the alarm unit in any given place.

An example may be a person having a car and a sailing boat. When he wants e.g. his boat to be protected by an alarm unit according to the invention, he may place it anywhere on the boat where it is stable and preferably out of sight. This may be in a cupboard, a food safe or a similar storage room. Other kinds of rooms may also be used such as a motor compartment, an electric fuse locker or the interior of e.g. a motor.

The choice of storage of the alarm unit should, of course, be made on the basis of the need for frequently moving the alarm unit. If the alarm unit only is to be used in one object e.g. a sailing boat or a car, a position may be chosen to which access is quite difficult. An example could be a less accessible part of a motor compartment of the sailing ship or the car.

Easy removal of the alarm unit from one place of use to another and the simple installation procedure are some of the main advantages of the invention.

When, as stated in claim 10, said at least one transmitting and receiving means further comprises a loudspeaker, it is possible for a person to locate the alarm unit in a simple way. The alarm unit may be hidden for a long period and still remain active which may lead to the problem of actually remembering where the unit was originally hidden after a while. By mounting a loudspeaker in the alarm unit, it is possible to make the unit reveal its position by "communicating" a characteristic sound when the person has been approved.

When, as stated in claim 11, said alarm unit is sealed, it is possible to protect the alarm unit from water or chemicals entering the delicate interior of the unit and causing malfunctions. Especially, it is advantageous that the alarm unit may be placed in an e.g. moist and salt climate without having to consider the risk of corrosion in the unit.

The alarm unit will usually be partly or totally concealed in a plastic embedment. The embedment protects the alarm unit from the climate but it also protects the unit from being destroyed or in other ways shut off if a thief should locate it. To penetrate the plastic embedment, very sharp tools and a lot of patience are required.

Usually, the energy source will be placed outside the plastic embedment to ensure that the source, e.g. a battery, may be replaced. The connection from the energy source to the rest of the alarm unit concealed in the plastic embedment may be established by penetrating the embedment with electric wires.

If the casing is also sealed e.g. with a jointing material, it is possible to protect the energy source and the electric wires from water or chemicals entering as mentioned above. At the same time, the casing should be protected against opening by unauthorized persons e.g. by using holding means such as bolts with heads breaking off if someone tries to remove them.

When, as stated in claim 12, said unit further comprises a GPS unit, it possible to determine the position of the alarm unit e.g. if an alarm message has been transmitted from the unit.

When, as stated in claim 13, a method for controlling a theft alarm wherein one or more detecting means detects a direction value of the system relative to the orientation of the Earth's magnetic field, at least one signal processing means maps a reference direction of the system on the basis a direction value of the system, said at least one signal processing means establishes at least one clearance value, wherein said at least one signal processing means defines an alarm area and a non-alarm area by adding the clearance value to the reference direction and compares said direction value with said alarm area and a non-alarm area, and wherein said alarm system establishes a connection to said one or more alarm devices in dependency of said comparison, it is possible to control a theft alarm in an advantageous way.

The possibility of controlling the clearance value from a distance with a remote control unit such as a mobile telephone is particularly advantageous since it opens up for the possibility of quickly changing the clearance if the conditions for the value have changed.

An example of this is use of the alarm unit on a ship where the clearance value is set according to fair weather. If the weather should later change from fair to storm, it is advantageous to have possibility of increasing the clearance value and avoid a false alarm due to the ship's stronger movements.

Another example is the possibility of shutting of the alarm from a distance e.g. if another person needs to use or move the movable unit.

When, as stated in claim 14, said reference direction of the system is established after a time delay, an advantageous embodiment of the invention has been obtained. The time delay will ensure that vibrations in connection with the placing of the alarm unit have died out and a stable reference direction has been established.

When, as stated in claim 15, detection of said direction value is performed at predefined intervals such as every three seconds, it is possible to increase the lifetime of the energy source.

The choice of three seconds or a similar short period ensures that the alarm system may not be destroyed between two awakenings. Longer periods are also possible but require that the alarm unit be hidden in a safer place. Also, longer periods will increase the lifetime of the energy source further.

It should be emphasized that continuous detection of the direction value also is possible but requires a larger energy source.

When, as stated in claim 16, said direction value is detected for a time period such as 1 to 10 milliseconds, and preferably 5 milliseconds, it is possible to increase the lifetime of the battery and still be provided with accurate detection of the direction value.

When, as stated in claim 17, said comparison is performed once again if the direction value is close to the alarm area in which the direction value is detected for a longer time period such as 10 to 100 milliseconds, and preferably 20 to 25 milliseconds, it is possible increase the accuracy of detection of the direction value and hereby minimize the risk of a false alarm.

### Drawings

The invention will be described in detail in the following with reference to the drawings of which
- Fig. 1: illustrates an area of use for the invention,
- Fig. 2: illustrates a preferred embodiment of the invention,
- Fig. 3: illustrates the principle relations of part of the alarm system,
- Fig. 4: illustrates a flow diagram of the preferred embodiment of the invention,
- Fig. 5a: illustrates the principles of establishing a first direction clearance value,
- Fig. 5b: illustrates the principles of establishing a second direction clearance value,
- Fig. 6: illustrates a remote control according to a preferred embodiment of the invention, and
- Fig. 7: illustrates an embodiment of a detecting means.

### Detailed description

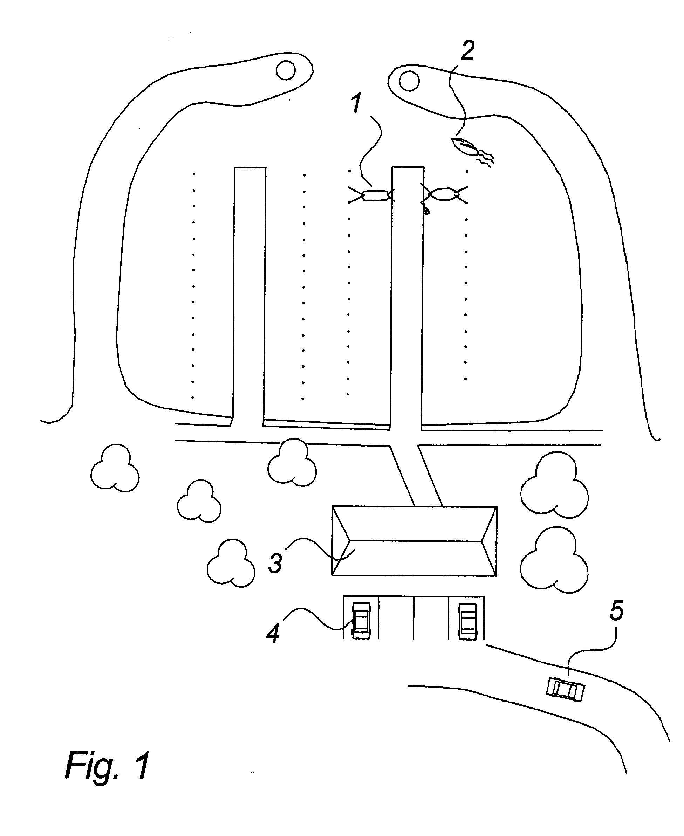

Figure 1 shows a typical area of use for the invention which is a harbor. The theft alarm system may be used in connection with maritime vessels 1, 2, such as sailing ships or motor boats, and motor vehicles 4, 5 such as cars, motor cycles and trucks. It will also be possible to use the invention in any other type of removable part attractive to steal because of e.g. accessibility and value. An example of such a part is an outboard motor from a maritime vessel or a trailer from a car.

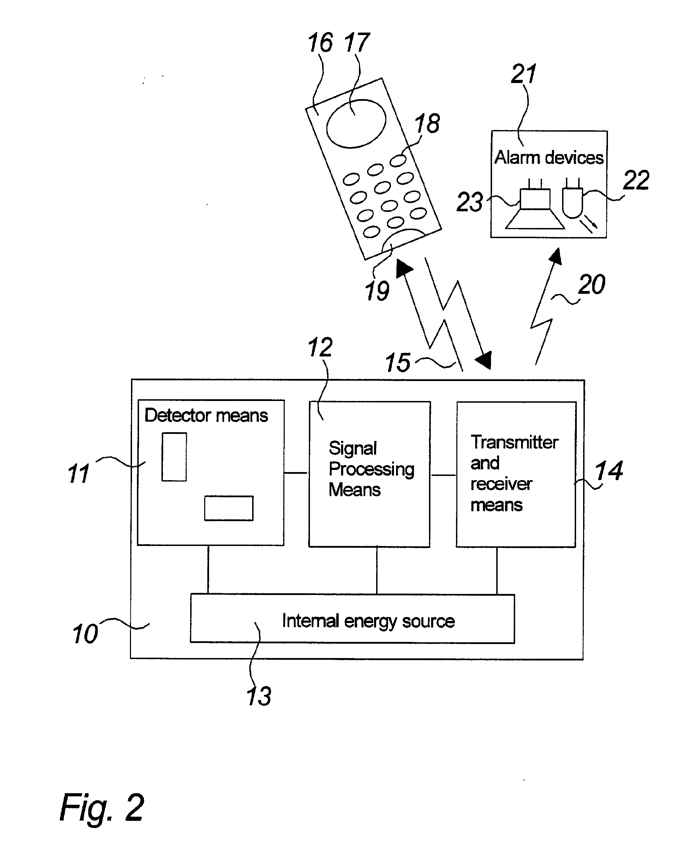

Figure 2 illustrates the principle elements of the invention in a preferred embodiment. A first element is the alarm unit 10 which comprises detecting means 11, signal processing means 12, an internal energy source 13 and transmitting and receiving means 14.

The detecting means 12 preferably comprises two hall elements placed perpendicularly to each other. The hall elements each generate a measure voltage on the basis of the Earth's magnetic field where the angle between the hall element and the magnetic field controls the voltage level generated in the hall element. By comparing the voltage generated in the two perpendicular hall elements, it is possible to determine the direction of the magnetic field in relation to the detecting means 11.

The detecting means 12 may further comprise a global position system unit (GPS).

Hall elements and the use of hall elements for measuring magnetic fields are well known by people skilled in the art. The GPS system and GPS units are also well known by people skilled in the art. In the light of these facts, the basic functionalities of the hall elements and the GPS system/unit are not explained in any further detail.

The directional signal from the detecting means 11 is lead to the signal processing means 12 where the signal is processed. The signal processing means also has a connection to the transmitting and receiving means 14 which may communicate with a remote control unit 16 and alarm devices 21 through wireless connections 15, 20.

The internal energy source 13 supplies the detecting means 1, the signal processing means and the transmitting and receiving means 14 with the necessary energy. In a preferred embodiment of the invention, the energy source has no contact outside of the alarm unit 10 but contains sufficient energy to supply the unit for a long period of time. The energy source may e.g. be one or more batteries or a number of capacitors. The energy required by the means of the alarm unit 10 is quite low at a normal active mode and only when the unit signals an alarm does it consume energy of any significance.

The alarm devices 21 may be an alarm central which will investigate any alarm calls from the alarm unit 10 i.e. by dispatching a vehicle with watchmen or policemen. The alarm devices 21 may, however, also be sound and light indications 22, 23 placed within the movable unit, i.e. the horn and radio loudspeaker of a car, or in a place close to the movable units. In figure 1, an alarm unit is illustrated on a sailing ship 1 where the alarm devices are placed in a nearby harbor house 3. In case of an alarm, people in the house may swiftly check the situation of the ship 1.

The remote control unit 16 comprises a display 17 and a keyboard 18 with a number of buttons 18a-18d. The control unit 16 communicates with the alarm unit wirelessly and the communication from the alarm unit may be alarm messages or service messages such as "battery low". The communication from the remote control unit 16 may be a dispatch of the password which is necessary to communicate further with the alarm unit 10. Hereafter, it may be an on/off signal or a change of the clearance value.

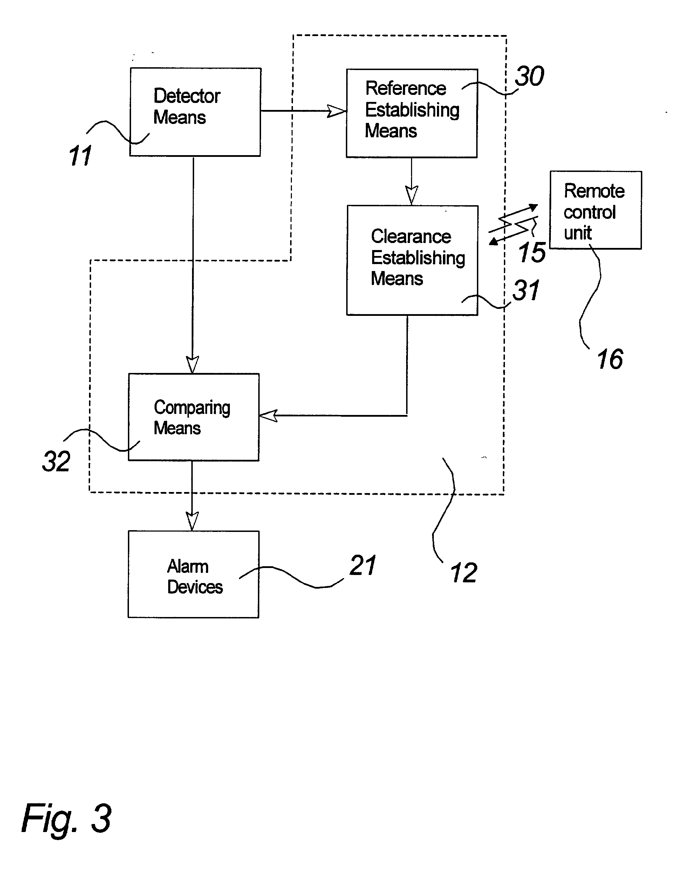

Figure 3 shows the principle relations of the detecting means 11, the signal processing means 12 and the alarm devices 21 of the alarm system. The basic elements of the signal processing means 12 are shown in detail.

The signal from the detecting means 11 is connected to reference establishing means 30. In the reference establishing means, a reference direction is established after a short time delay to avoid any vibrations in connection with the placing of the alarm unit. A clearance value in clearance establishing means 31 is added to the reference direction and the result is stored. With the clearance value added, an alarm and a non-alarm area are defined.

By comparing means 32, the result is compared with the presently detected direction value by the detecting means 11. If the direction value is outside the non-alarm area and thereby in the alarm area, the comparing means 32 will connect with the alarm devices 21 and set off the alarm. Together with the alarm signal, the GPS unit may furthermore transmit a position signal of the alarm unit 10.

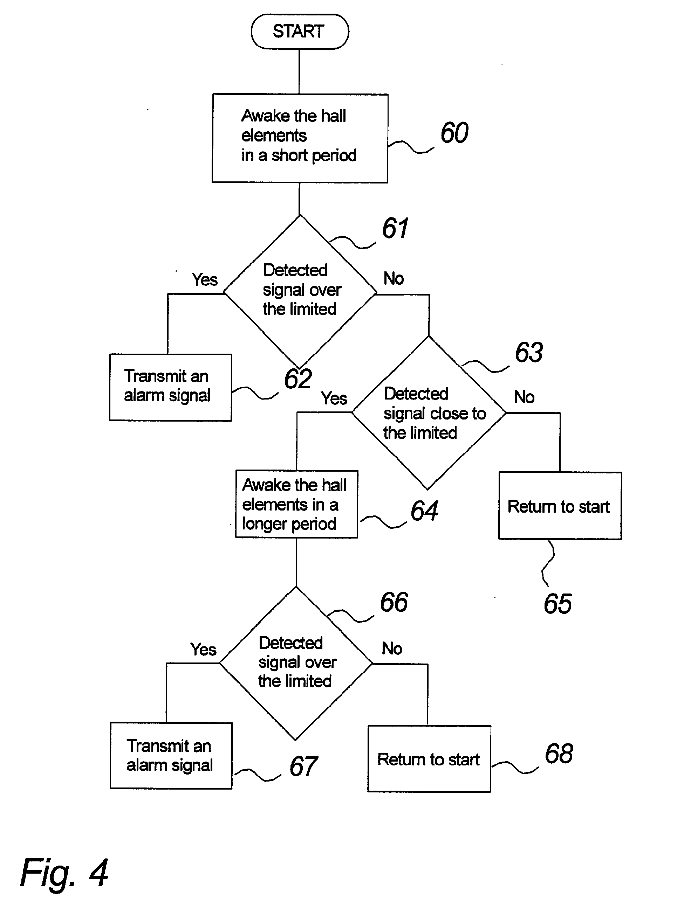

In figure 4, the flow diagram illustrates the basic measuring process for the alarm unit. The alarm unit awakes the hall element of the detecting means 11 by transmitting power for a period of time. The awakenings are performed with suitable intervals such as every three seconds.

A normal awakening of the detector means 11 has a quite short time span such as 1 to 10 milliseconds, and preferably 5 milliseconds 60. The direction signal measured by the hall elements in the time span is compared in the comparing means 32 with the clearance value 61. If the result of the comparison is within the alarm area, the alarm unit will transmit an alarm signal to the alarm devices 62.

If the result is in the non-alarm area, a further investigation is performed to determine whether the detection signal is close to the alarm area or not 63. A result showing that the detection signal is not close to the alarm area will mean that the alarm unit continues with its normal functionality 65.

However, a result showing that the detection signal is close to the alarm area will affect a prolonged awakening of the detecting means 11 in the next period 66. The duration of the awakening may be 10 to 100 milliseconds or even longer, and preferably 20 to 25 milliseconds. If the result shows that the direction signal is in the alarm area, the alarm unit will transmit an alarm signal to the alarm devices 67, and if not, the alarm unit will return to its normal functionality with awakenings of a short time span 68.

It is understood that the time spans of the awakenings may be changed to any preferred value. However, the length of the spans affects the lifetime of the battery.

As illustrated in figure 3, the clearance value may be set and changed with the remote control unit 16 through a wireless connection to the clearance establishing means 31 of the signal processing means 12. The clearance value from the remote control unit may be a one of a number of pre-set values or a value which may be changed by the remote control unit 16.

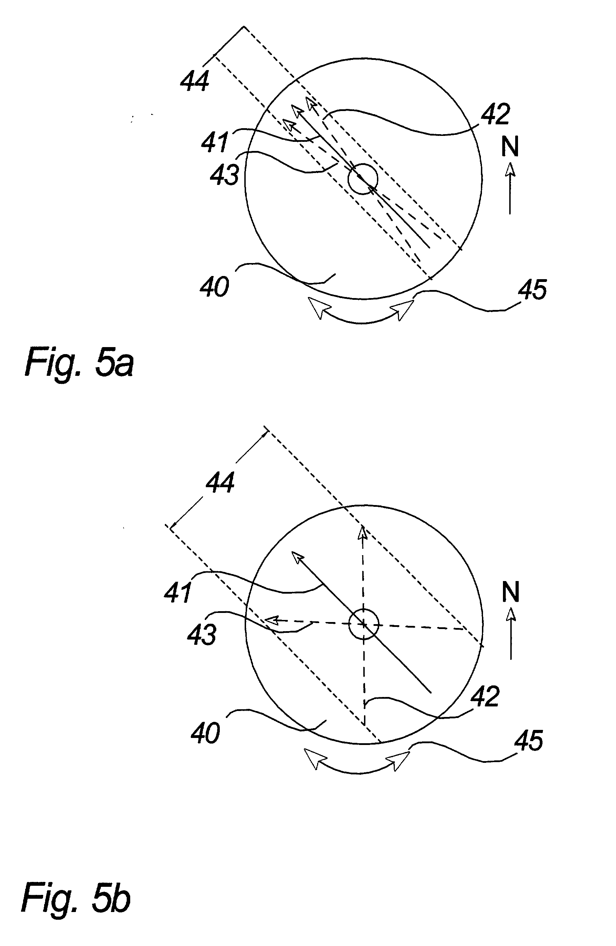

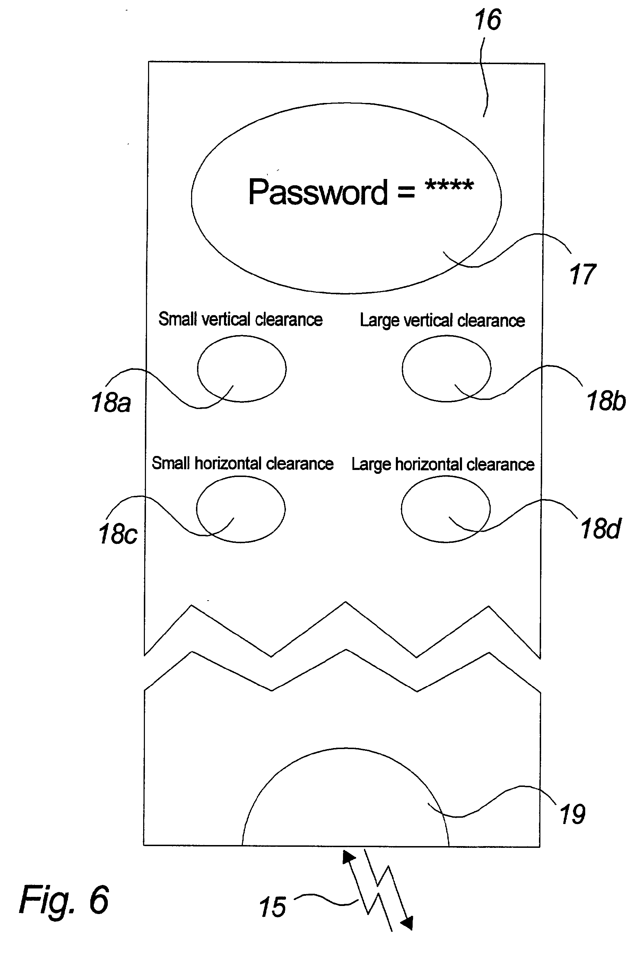

Figures 5a, 5b and figure 6 show that the pre-set values may be prepared for special use such as low clearance value for a car (figure 5a) and high clearance value for a ship (figure 5b) where the movements of the ship can be more significant without the alarm system setting off the alarm.

Figure 6 illustrates the remote control unit 16 where a part of the keyboard 18 includes 4 buttons 18a-d. The buttons are used to set the clearance value to the different applications where the buttons 18b and 18d are used in connection with e.g. a ship where the clearance value should be high and the buttons 18a and 18c are used in connection with e.g. a car where the clearance value should be low.

In a further embodiment of the invention, at least one hall element is added to the two hall elements and placed perpendicularly to both hall elements. Hereby, it is possible to detect any direction in both a horizontal and vertical plane.

As illustrated in figure 6, the vertical clearance may be set with the buttons 18a and 18b of the remote control unit 16. The vertical clearance is important in connection with movable units when the movements are in a vertical direction such as with ships or aeroplanes.

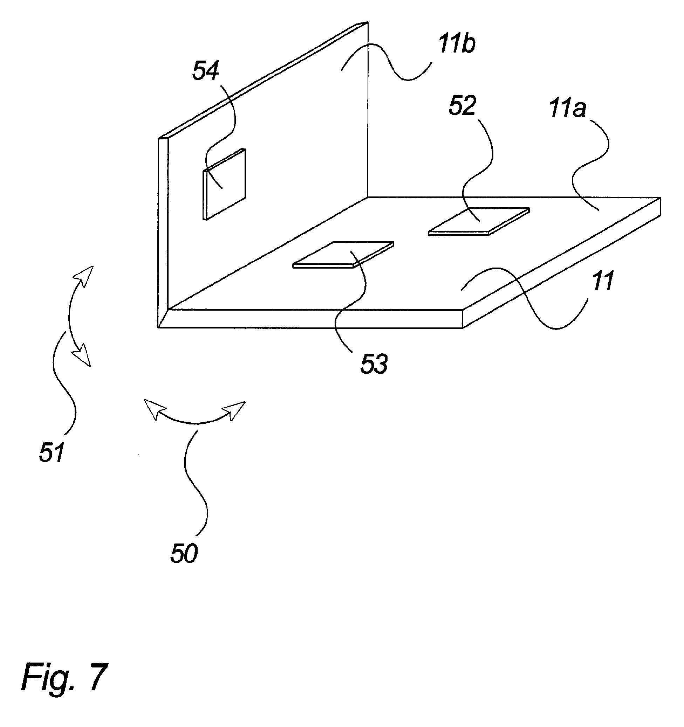

Figure 7 shows a practical construction of the detecting means 11 to be used in connection with the latter embodiment. The three hall elements 52, 53, 54 are mounted on plates standing perpendicularly to each other and where the elements also are placed perpendicularly to each other. Hereby, it is possible to make detections in a partly horizontal and vertical direction illustrated by the horizontal and vertical direction arrows 50 and 51.

The hall elements 52, 53 in figure 7 may furthermore be placed in a gyroscopic arrangement ensuring that the elements are always in a horizontal plane. The gyroscopic arrangement may contain the elements only or the entire alarm unit including the hall elements. Hereby, the detection of the vertical direction will be of less or no importance.

It should be emphasized that the above-mentioned embodiment may be subject to several variations within the scope of the invention. In a variation, the hall elements may detect the position of a magnetic needle when the needle is suspended horizontally as an ordinary compass needle and follows the Earth's magnetic field.

### List

- 1.: Moored maritime vessel
- 2.: Sailing maritime vessel
- 3.: Harbor house
- 4.: Parked vehicle
- 5.: Moving vehicle
- 10.: Alarm unit
- 11.: Detecting means
- 11a.: Horizontal part of detecting means
- 11b.: Vertical part of detecting means
- 12.: Signal processing means
- 13.: Energy source
- 14.: Transmitting and receiving means
- 15.: Connection between alarm unit and remote control
- 16.: Remote control unit
- 17.: Display
- 18.: Keyboard
- 18a.: Button for small vertical clearance
- 18b.: Button for large vertical clearance
- 18c.: Button for small horizontal clearance
- 18d.: Button for large horizontal clearance
- 19.: Communication area
- 20.: Connection between alarm unit and alarm devices
- 21.: Alarm devices
- 22.: Light alarm device
- 23.: Sound alarm device
- 30.: Reference establishing means
- 31.: Clearance establishing means
- 32.: Comparing means
- 40.: Detector area
- 41.: Reference direction arrow
- 42.: First maximum clearance deflection arrow
- 43.: Second maximum clearance deflection arrow
- 44.: Direction clearance value
- 45.: Directions of motion
- 50.: Directions of horizontal motion
- 51.: Directions of vertical motion
- 52.: First detector unit
- 53.: Second detector unit
- 54.: Third detector unit
- 60-68.: Flow diagram

## Claims

1. A theft alarm system for one or more movable units (1, 2, 4, 5) comprising
one or more detecting means (11, 11a, 11b) detecting a direction value of the system relative to the orientation of the Earth's magnetic field,
at least one signal processing means (12) comprising means for mapping a reference direction of the system on the basis of a direction value of the system,
one or more alarm devices (21),
**characterised in that**
said signal processing means (12) further comprises
means (31) for receiving a direction clearance value (44),
means (31) for defining an alarm area and a non-alarm area in relation to a direction clearance value (44),
means (31) for establishing a comparison value by comparing a direction value with said alarm area and non-alarm area and
wherein said alarm system further comprises means (14) for establishing a connection (20) to said one or more alarm devices (21; 23) in dependency of said comparison value.

2. A theft alarm system according to claim 1 **characterised in that** said at least one detecting means (11) comprises hall elements.

3. A theft alarm system according to claim 1 or 2 **characterised in that** said at least one detecting means (11) comprises means (11a, 11b) for detecting a direction in a horizontal and/or vertical plane.

4. A theft alarm system according to claim 1 **characterised in that** said clearance value (44) is changeable.

5. A theft alarm system according to claim 1 **characterised in that** said alarm system further comprises at least one transmitting and receiving means (14).

6. A theft alarm system according to claim 5 **characterised in that** said at least one transmitting and receiving means (14) is a wireless communication device, such as a mobile telephone module.

7. A theft alarm system according to claim 1 **characterised in that** said at least one transmitting and receiving means (14) communicates with a remote control unit (16), such as a mobile telephone.

8. A theft alarm system according to claim 1 **characterised in that** said system includes mounting means to be used when mounting said system to said one or more movable units.

9. Alarm unit (10) for a theft alarm system for one or more movable units according to claim 1 comprising
one or more detecting means (11),
at least one signal processing means (12),
at least one transmitting and receiving means (14) and
an energy source (13)
where said alarm unit (10) is housed in a compact casing.

10. Alarm unit according to claim 9 **characterised in that** said unit (10) further comprises a loudspeaker.

11. Alarm unit according to claim 9 **characterised in that** said alarm unit is sealed.

12. Alarm unit according to claim 9 **characterised in that** said unit (10) further comprises a GPS unit.

13. Method for controlling a theft alarm wherein
one or more detecting means detects a direction value of the system relative to the orientation of the Earth's magnetic field,
at least one signal processing means maps a reference direction of the system on the basis of a direction value of the system,
said at least one signal processing means establishes at least one clearance value,
wherein said at least one signal processing means defines an alarm area and a non-alarm area by adding the clearance value to the reference direction and compares said direction value with said alarm area and a non-alarm area, and
wherein said alarm system establishes a connection to said one or more alarm devices in dependency of said comparison.

14. Method according to claim 13 **characterised in that** said reference direction of the system is established after a time delay.

15. A theft alarm system according to claim 13 **characterised in that** detection of said direction value is performed at predefined intervals such as every three seconds.

16. Method according to claim 13 **characterised in that** said direction value is detected for a time period such as 1 to 10 milliseconds, and preferably 5 milliseconds.

17. Method according to claim 13 **characterised in that** said comparison is performed once again if the direction value is close to the alarm area in which the direction value is detected for a longer time period such as 10 to 100 milliseconds, and preferably 20 to 25 milliseconds.

18. Use of a system according to claims 1-9 in maritime vessels or units to be used in maritime vessels.
